# EUROPEAN PATENT SPECIFICATION

(11) **EP 3 467 603 B1**
(45) Date of publication and mention of the grant of the patent: **15.03.2023**
(21) Application number: 18193437.3
(22) Date of filing: 10.09.2018
(51) Int. Cl.: G05B 19/418

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF DE TRAITEMENT D'INFORMATIONS, PROCÉDÉ DE TRAITEMENT D'INFORMATIONS ET PROGRAMME DE TRAITEMENT D'INFORMATIONS

(30) Priority: 04.10.2017 JP 2017194206
(43) Date of publication of application: 10.04.2019
(73) Proprietor: OMRON CORPORATION, Kyoto-shi, Kyoto 600-8530 (JP)
(72) Inventor: OYA, Taku, Kyoto-shi, Kyoto 600-8530 (JP); SHIMAKAWA, Haruna, Kyoto-shi, Kyoto 600-8530 (JP)
(74) Representative: Becker Kurig & Partner Patentanwälte mbB

(56) References cited:
- US-A- 5 247 650
- US-A1- 2010 030 357
- US-A1- 2012 101 613
- US-A1- 2017 235 300
- IWATA ET AL: "A Modelling and Simulation Architecture for Virtual Manufacturing Systems", CIRP ANNALS, ELSEVIER BV, NL, CH, FR, vol. 44, no. 1, 1 January 1995 (1995-01-01), pages 399-402, XP022137073, ISSN: 0007-8506, DOI: 10.1016/S0007-8506(07)62350-6

## Description

### BACKGROUND

### Technical Field

The disclosure relates to a technology for realizing a communication mode in an industrial network on a computer.

### Description of Related Art

In various production sites, factory automation (FA) systems that automate production processes are spreading. An FA system includes a moving table for moving a workpiece, a conveyor for conveying the workpiece, an arm robot for moving the workpiece to a predetermined target place, and the like. Hereinafter, the moving table, the conveyor, the arm robot, and the like are collectively referred to as a "conveying device." The conveying device is controlled by a controller such as a programmable logic controller (PLC) or a robot controller.

Usually, a designer confirms that a designed control program operates as intended on a simulation and then writes the control program to a controller. Regarding a technology for supporting such a simulation, Japanese Unexamined Patent Publication No. 2016-42378 (Patent Document 1) discloses a simulation device capable of realizing an integrated simulation including a visual sensor.

[Patent Document 1] Japanese Unexamined Patent Publication No. 2016-42378

US 2010/030357 A1 discloses a method of manufacturing facility process optimization including monitoring communication signals within a facility device network, analyzing work station specific patterns in the communication signals, developing operational dependencies for work stations based upon the work station specific patterns, and predictively evaluating impacts to the work stations of the proposed configuration of the manufacturing facility process based upon the operational dependencies.

### SUMMARY

Each device constituting an FA system is connected to an industrial network (hereinafter referred to as "field network"). In order to accurately simulate a behavior of the FA system, it is necessary for a communication mode of the field network to be reproduced on a computer. The simulation device disclosed in Patent Document 1 does not reproduce the communication mode of the field network. Therefore, a technology for reproducing the communication mode of the field network on the computer is desired. In an example of the disclosure, an information processing device includes a first actuator emulator that simulates a behavior of a first driving device according to an input first command value; a second actuator emulator that simulates a behavior of a second driving device cooperating with the first driving device according to an input second command value; a first controller emulator that simulates a behavior of a first controller that controls the first driving device by outputting the first command value to the first actuator emulator; a second controller emulator that simulates a behavior of a second controller that controls the second driving device by outputting the second command value to the second actuator emulator; and a storage device for storing first and second data that are shared between the first controller emulator and the second controller emulator. The first controller emulator calculates the first command value using the first data as an input at each predetermined first control period according to a communication period between the first controller and the second controller and updates the second data with data that is a predetermined collection target representing a behavior of the first actuator emulator at each first control period. The second controller emulator calculates the second command value using the second data as an input and updates the first data with data that is a predetermined collection target representing a behavior of the second actuator emulator at each predetermined second control period according to the communication period.

The present invention is provided by appended claims 1, 5, and 6. Beneficial embodiments are provided in the dependent claims. The following disclosure serves a better understanding of the present invention. According to this disclosure, input data and output data are shared between the first controller emulator that simulates the behavior of the first controller and the second controller emulator that simulates the behavior of the second controller. The first controller emulator acquires the input data and updates the output data at each first control period according to a communication period between the first controller and the second controller. On the other hand, the second controller emulator acquires the output data and updates the input data at each second control period according to the communication period between the first controller and the second controller. Thus, the information processing device can realize data exchange between the first controller emulator and the second controller emulator in the same manner as data exchange on the field network.

In another example of the disclosure, the information processing device further includes a timer for generating a virtual time. The first control period and the second control period are synchronized by the virtual time.

According to this disclosure, by synchronizing the first control period with the second control period, it is possible to synchronize the behavior of the first controller emulator with the behavior of the second controller emulator.

In still another example of the disclosure, the data that is the collection target of the first controller emulator includes a state value of the first actuator emulator. The data that is the collection target of the second controller emulator includes a state value of the second actuator emulator. The first controller emulator calculates the first command value on the basis of the state value of the second actuator emulator and updates the second data with a current state value of the first actuator emulator at each first control period. The second controller emulator calculates the second command value on the basis of the state value of the first actuator emulator and updates the first data with a current state value of the second actuator emulator at each second control period.

According to this disclosure, the first controller emulator can calculate the command value for the first actuator emulator according to the state value of the second driving device. On the other hand, the second controller emulator can calculate the command value for the second actuator emulator according to the state value of the first driving device. Thus, the information processing device can cause the first driving device and the second driving device to cooperate with each other on a simulation.

In still another embodiment of the disclosure, the storage device further stores a first control program for controlling the first controller emulator and a second control program for controlling the second controller emulator. A type of the first control program is different from a type of the second control program.

According to this disclosure, even when the first controller emulator and the second controller emulator are each controlled by different types of control programs, the information processing device can reproduce the communication mode of the field network on the computer, thereby increasing versatility.

In still another example of the disclosure, the first control program is a cyclic execution type program. The second control program is a sequential execution type program.

According to this disclosure, even when the first controller emulator and the second controller emulator are each controlled by control programs of which the execution forms are different from each other, the information processing device can reproduce the communication mode of the field network on the computer, thereby increasing versatility.

In still another example of the disclosure, an information processing method comprises the steps of: controlling a first actuator emulator that simulates a behavior of a first driving device according to an input first command value; controlling a second actuator emulator that simulates a behavior of a second driving device cooperating with the first driving device according to an input second command value; controlling a first controller emulator that simulates a behavior of a first controller that controls the first driving device by outputting the first command value to the first actuator emulator; controlling a second controller emulator that simulates a behavior of a second controller that controls the second driving device by outputting the second command value to the second actuator emulator; and preparing first and second data that are shared between the first controller emulator and the second controller emulator. The step of controlling the first controller emulator includes calculating the first command value using the first data as an input at each predetermined first control period according to a communication period between the first controller and the second controller and updating the second data with data that is a predetermined collection target regarding a behavior of the first actuator emulator at each first control period. The step of controlling the second controller emulator includes calculating the second command value using the second data as an input and updating the first data with data that is a predetermined collection target regarding a behavior of the second actuator emulator at each predetermined second control period according to the communication period.

According to this disclosure, input data and output data are shared between the first controller emulator that simulates the behavior of the first controller and the second controller emulator that simulates the behavior of the second controller. The first controller emulator acquires the input data and updates the output data at each first control period according to a communication period between the first controller and the second controller. On the other hand, the second controller emulator acquires the output data and updates the input data at each second control period according to the communication period between the first controller and the second controller. Thus, data exchange between the first controller emulator and the second controller emulator is realized in the same manner as data exchange on the field network.

In still another example of the disclosure, an information processing program causes the computer to execute the steps of: controlling a first actuator emulator that simulates a behavior of a first driving device according to an input first command value; controlling a second actuator emulator that simulates a behavior of a second driving device cooperating with the first driving device according to an input second command value; controlling a first controller emulator that simulates a behavior of a first controller that controls the first driving device by outputting the first command value to the first actuator emulator; controlling a second controller emulator that simulates a behavior of a second controller that controls the second driving device by outputting the second command value to the second actuator emulator; and preparing first and second data that are shared between the first controller emulator and the second controller emulator. The step of controlling the first controller emulator includes calculating the first command value using the first data as an input at each predetermined first control period according to a communication period between the first controller and the second controller and updating the second data with data that is a predetermined collection target regarding a behavior of the first actuator emulator at each first control period. The step of controlling the second controller emulator includes calculating the second command value using the second data as an input and updating the first data with data that is a predetermined collection target regarding a behavior of the second actuator emulator at each predetermined second control period according to the communication period.

According to this disclosure, input data and output data are shared between the first controller emulator that simulates the behavior of the first controller and the second controller emulator that simulates the behavior of the second controller. The first controller emulator acquires the input data and updates the output data at each first control period according to a communication period between the first controller and the second controller. On the other hand, the second controller emulator acquires the output data and updates the input data at each second control period according to the communication period between the first controller and the second controller. Thus, data exchange between the first controller emulator and the second controller emulator is realized in the same manner as data exchange on the field network.

In an aspect, it is possible to reproduce the communication mode of the field network on the computer.

### BRIEF DESCRIPTION OF THE DRAWINGS

FIG. 1 is a diagram illustrating an information processing device that provides a simulation environment of an FA system according to an embodiment.
FIG. 2 is a diagram illustrating a process of updating shared data in time series.
FIG. 3 is a diagram illustrating an example of a system configuration of the FA system according to an embodiment.
FIG. 4 is a diagram illustrating an example of a configuration of a virtual FA system according to an embodiment.
FIG. 5 is a diagram illustrating an example of a generated trajectory.
FIG. 6 is a diagram illustrating an example of an editing screen of a PLC program and a robot program.
FIG. 7 is a diagram illustrating an example of an editing screen of a PLC program and a robot program.
FIG. 8 is a diagram illustrating a process of synchronizing output timings of command values for an actuator emulator.
FIG. 9 is a diagram illustrating an example of a simulation screen in the information processing device according to the embodiment.
FIG. 10 is a schematic diagram illustrating a hardware configuration of the information processing device according to the embodiment.
FIG. 11 is a flowchart showing a part of a process that is executed by a control device of the information processing device according to the embodiment.

### DESCRIPTION OF THE EMBODIMENTS

Hereinafter, each embodiment according to the disclosure will be described with reference to the drawings. In the following description, the same parts and components are denoted by the same reference numerals. Names and functions thereof are also the same. Therefore, detailed description of these will not be repeated.

### <A. Example of application>

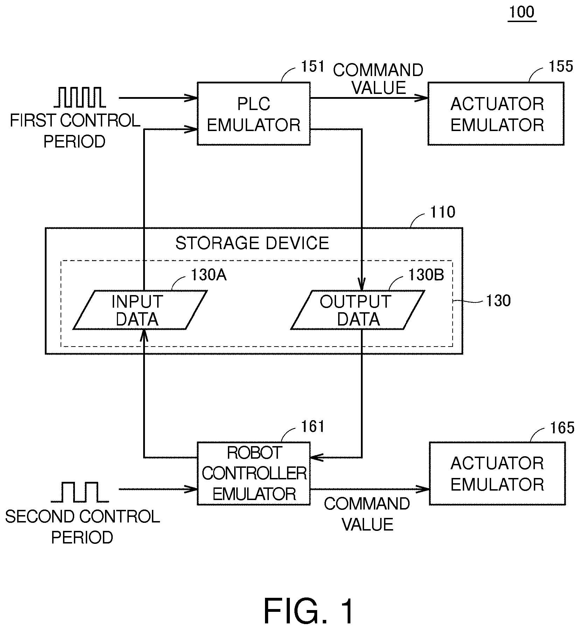

First, an example of an application of the disclosure will be described with reference to FIG. 1. FIG. 1 is a diagram illustrating an information processing device 100 that provides a simulation environment of an FA system.

The information processing device 100 simulates a behavior of the FA system while reproducing a communication mode of an industrial network (that is, a field network) on a computer. The field network is a network that performs periodic communication in which arrival time of data is guaranteed. EtherCAT (registered trademark), EtherNet/IP (registered trademark), DeviceNet (registered trademark), CompoNet (registered trademark), and the like are known as networks that perform such periodic communication.

The field network will be described by taking a communication mode of EtherCAT as an example to promote understanding. One master device and a plurality of slave devices are mainly connected to the field network. The master device transmits a frame for I/O refreshing to the field network. The I/O refreshing is a process of updating an input value from each slave device, and an output value and a command value to each slave device. In this I/O refreshing, the master device transmits a frame for I/O refreshing to each slave device, and when each slave device receives the frame from the master device, each slave device reads the output value or the command value included in the frame and then writes a previously collected input value in a predetermined area of the frame. By performing such transmission of the frame at a predetermined period, periodic communication is realized.

The information processing device 100 simulates the behavior of the FA system while reproducing the communication mode of the field network on the computer. A configuration for this, the information processing device 100 includes a storage device 110, a PLC emulator 151 (a first controller emulator), an actuator emulator 155 (a first actuator emulator), a robot controller emulator 161 (a second controller emulator), and an actuator emulator 165 (a second actuator emulator).

The storage device 110 stores shared data 130 between the PLC emulator 151 and the robot controller emulator 161. The shared data 130 includes input data 130A (first data) and output data 130B (second data).

The PLC emulator 151 is a program for simulating a behavior of a controller (first controller) such as a PLC. In the example of FIG. 1, the PLC emulator 151 is mounted to control the actuator emulator 155. The actuator emulator 155 is a program for simulating a behavior of a driving device such as a workpiece conveying device (for example, a moving table, a conveyor, or an arm robot).

The robot controller emulator 161 is a program for simulating a behavior of a controller (a second controller) such as a robot controller. In the example of FIG. 1, the robot controller emulator 161 is mounted to control the actuator emulator 165. The actuator emulator 165 is a program for simulating a behavior of a driving device such as a workpiece conveying device (for example, a moving table, a conveyor, or an arm robot).

The PLC emulator 151 calculates a command value (a first command value) for the actuator emulator 155 using the input data 130A as an input at each predetermined first control period according to the communication period between the controllers, and updates the output data 130B with data that is the predetermined collection target regarding a behavior of the actuator emulator 155 at each first control period. The data that is the collection target is designated in advance and is, for example, various pieces of data that are used for the robot controller emulator 161. It should be noted that the first control period does not necessarily need to be the same as the communication period between the controllers as long as the communication period between the controllers can be reproduced on the computer.

The robot controller emulator 161 calculates a command value (a second command value) for the actuator emulator 165 using the output data 130B as an input at each predetermined second control period according to the communication period between the controllers, and updates the input data 130A with data that is the predetermined collection target regarding a behavior of the actuator emulator 165 at each second control period. The data that is the collection target is designated in advance and is, for example, various pieces of data that are used for the PLC emulator 151. It should be noted that the second control period may be the same as or different from the first control period. Further, the second control period does not necessarily need to be the same as the communication period between the controllers as long as the communication period between the controllers can be reproduced on the computer.

Thus, the PLC emulator 151 acquires the input data 130A and updates the output data 130B at each first control period according to the communication period between the controllers. Meanwhile, the robot controller emulator 161 acquires the output data 130B and updates the input data 130A at each second control period according to the communication period between the controllers. Accordingly, the information processing device 100 can realize data exchange between the PLC emulator 151 and the robot controller emulator 161 in the same manner as the data exchange on the field network. By reproducing the communication mode of the field network on the computer, the information processing device 100 can accurately simulate the behavior of the FA system.

### <B. Shared data updating timing>

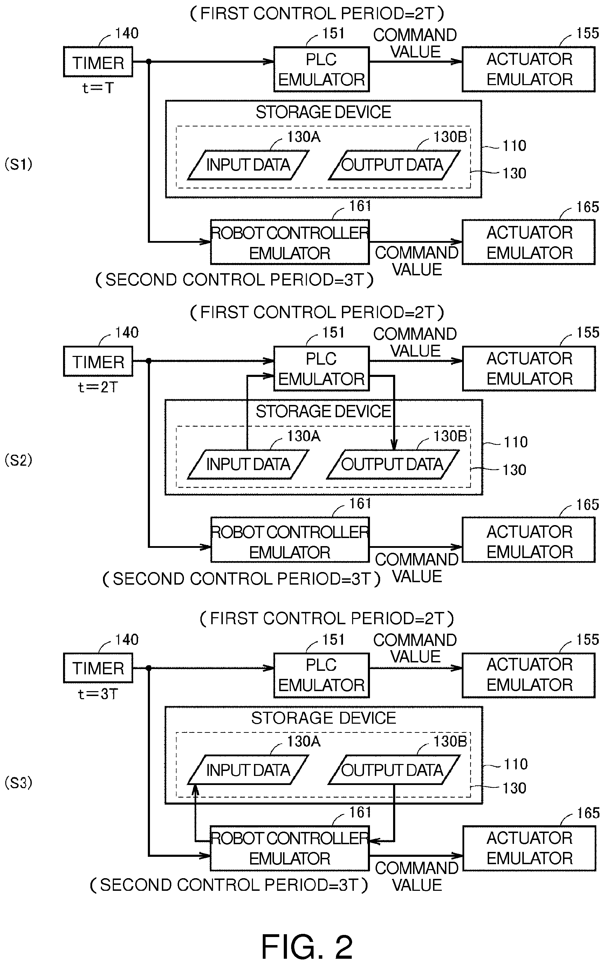

Updating timing of the shared data 130 will be described with reference to FIG. 2. FIG. 2 is a diagram illustrating a process of updating the shared data 130 in time series.

The information processing device 100 includes a timer 140 for generating a virtual time t. The virtual time is a measure of a virtual time indicating one timing during a simulation. The timer 140 sequentially counts up the virtual time t. A count-up interval need not be constant but may be different. The virtual time t is regularly output to the PLC emulator 151 and the robot controller emulator 161.

The first control period which is an updating period of the shared data 130 in the PLC emulator 151 and the second control period which is an updating period of the shared data 130 in the actuator emulator 155 are synchronized with the virtual time t generated by the timer 140. By the synchronization being realized by the virtual time t, the first control period and the second control period are synchronized without constraints of real time.

The first control period and the second control period can be arbitrarily set. Hereinafter, a process of updating the shared data 130 will be described on the premise that a control period "2T" is set as the first control period and a control period "3T" is set as the second control period.

In step S1, it is assumed that the virtual time t has reached time "T." In this case, the PLC emulator 151 does not determine that the updating timing of the shared data 130 has been reached. In this case, the PLC emulator 151 does not update the shared data 130. Similarly, when the virtual time t is "T," the robot controller emulator 161 does not determine that the updating timing of the shared data 130 has been reached. In this case, the robot controller emulator 161 does not update the shared data 130.

In step S2, it is assumed that the virtual time t has reached time "2T." On the basis of this, the PLC emulator 151 determines that the updating timing of the shared data 130 has been reached. In this case, the PLC emulator 151 calculates a command value for the actuator emulator 155 using the input data 130A in the shared data 130 as an input, and updates the output data 130B in the shared data 130 with data that is the predetermined collection target. On the other hand, the robot controller emulator 161 does not determine that the updating timing of the shared data 130 has been reached. In this case, the robot controller emulator 161 does not update the shared data 130.

In step S3, it is assumed that the virtual time t has reached the time "3T." In this case, the PLC emulator 151 does not determine that the updating timing of the shared data 130 has been reached. In this case, the PLC emulator 151 does not update the shared data 130. On the other hand, the robot controller emulator 161 determines that the updating timing of the shared data 130 has been reached. In this case, the robot controller emulator 161 calculates a command value for the actuator emulator 165 using the output data 130B of the shared data 130 as an input, and updates the input data 130A in the shared data 130 with the data that is the predetermined collection target.

Thereafter, when the virtual time t has reached an integral multiple of "2T," the PLC emulator 151 determines that the updating timing of the shared data 130 has been reached. Otherwise, the PLC emulator 151 does not determine that the updating timing of the shared data 130 has been reached. Similarly, when the virtual time t has reached an integral multiple of "3T," the robot controller emulator 161 determines that the updating timing of the shared data 130 has been reached. Otherwise, the robot controller emulator 161 does not determine that the updating timing of the shared data 130 has been reached.

### <C. Configuration of FA system>

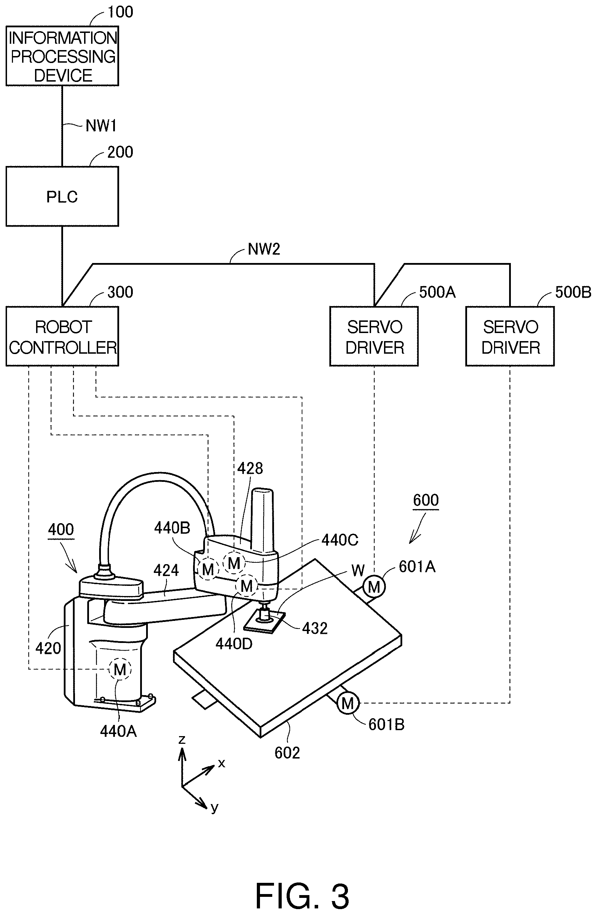

An example of the FA system that is a simulation target of the information processing device 100 will be described with reference to FIG. 3. FIG. 3 is a diagram illustrating an example of a system configuration of the FA system 1.

The FA system 1 includes an information processing device 100, a programmable logic controller (PLC) 200, a robot controller 300, an arm robot 400, servo drivers 500A and 500B, and a moving table 600.

For convenience of description, a predetermined direction on a horizontal plane is hereinafter also referred to as an x direction. A direction orthogonal to the x direction on the horizontal plane is also referred to as a y direction. A direction orthogonal to the x direction and the y direction is also referred to as a z direction. That is, the z direction corresponds to a vertical direction.

The information processing device 100 provides a designer with a development environment for designing the control program of the PLC 200 or the robot controller 300. The information processing device 100 is, for example, a support device such as a personal computer (PC), a tablet terminal, or a smartphone. The information processing device 100 and the PLC 200 are connected to a field network NW1. For example, EtherNET (registered trademark) is adopted for the field network NW1. However, the field network NW1 is not limited to EtherNET, and an arbitrary communication means can be adopted. For example, the information processing device 100 and the PLC 200 may be directly connected to each other by a signal line.

The PLC 200, the robot controller 300, and the servo drivers 500A and 500B are connected to a field network NW2 in a daisy chain. For the field network NW2, it is preferable for a network that performs periodic communication in which an arrival time of data is guaranteed to be adopted. EtherCAT, EtherNet/IP, DeviceNet, CompoNet, and the like are known as networks that perform such periodic communication.

The arm robot 400 is, for example, a SCARA robot. The arm robot 400 includes a base 420, a first arm 424, a second arm 428, and an end effector 432. The first arm 424 is connected to the base 420 and configured to be rotatable by a servo motor 440A on an xy plane with a connection point as a rotation shaft. The second arm 428 is connected to the first arm 424 and is rotationally driven by a servo motor 440B on the xy plane with a connection point as a rotation shaft. The end effector 432 is connected to the second arm 428, is configured to be able to be driven in the z direction by a servo motor 440C, and is configured to be rotatable by a servo motor 440D.

Hereinafter, the servo motors 440A to 440D are collectively referred to as a servo motor 440. A plurality of servo drivers (not illustrated) are incorporated in the robot controller 300, and each servo driver controls the corresponding servo motor 440. An encoder (not illustrated) is provided on the rotation shaft of the servo motor 440. The encoder feeds back a position (a rotation angle) of the servo motor 440, a rotation speed of the servo motor 440, the cumulative number of rotations of the servo motor 440, and the like to the corresponding servo driver. It should be noted that the servo driver is not necessarily incorporated in the robot controller 300, and may be provided separately from the robot controller 300.

The end effector 432 is, for example, a pickup tool for a workpiece W. The workpiece W is a product or a half-finished product. As an example, the end effector 432 picks up the workpiece W by suctioning the workpiece W using suction force. It should be noted that the arm robot 400 may be configured to pick up the workpiece W by gripping the workpiece W.

The moving table 600 includes servo motors 601A and 601B and an installation base 602 for the workpiece W. The servo motor 601A is controlled by the servo driver 500A and drives the installation base 602 in an x-axis direction. The servo motor 601B is controlled by the servo driver 500B and drives the installation base 602 in the y-axis direction. By cooperatively driving the servo motors 601A and 601B, the installation base 602 is driven to an arbitrary position on the xy plane.

Hereinafter, the servo drivers 500A and 500B are collectively referred to as a servo driver 500, and the servo motors 601A and 601B are collectively referred to as a servo motor 601. The servo driver 500 controls the corresponding servo motor 601. An encoder (not illustrated) is provided on a rotation shaft of the servo motor 601. The encoder feeds back a position (a rotation angle), a rotation speed, the cumulative number of rotations, and the like of the servo motor to the servo driver 500.

The PLC 200 and the robot controller 300 operate in cooperation, and therefore the arm robot 400 and the moving table 600 are synchronously driven. As a result, for example, the arm robot 400 can pick up the workpiece W on the installation base 602 while the moving table 600 is moving.

### <D. Virtual FA system>

The information processing device 100 according to the embodiment uses a group of emulators simulating a behavior of each device in the FA system 1 in order to simulate an operation of the FA system 1 as a real machine illustrated in FIG. 3. The emulator described herein is a program capable of reproducing the behavior of each device in the FA system 1. By accurately simulating the behavior of each device in the FA system 1, the information processing device 100 can accurately simulate the operation of the FA system 1 as an actual machine.

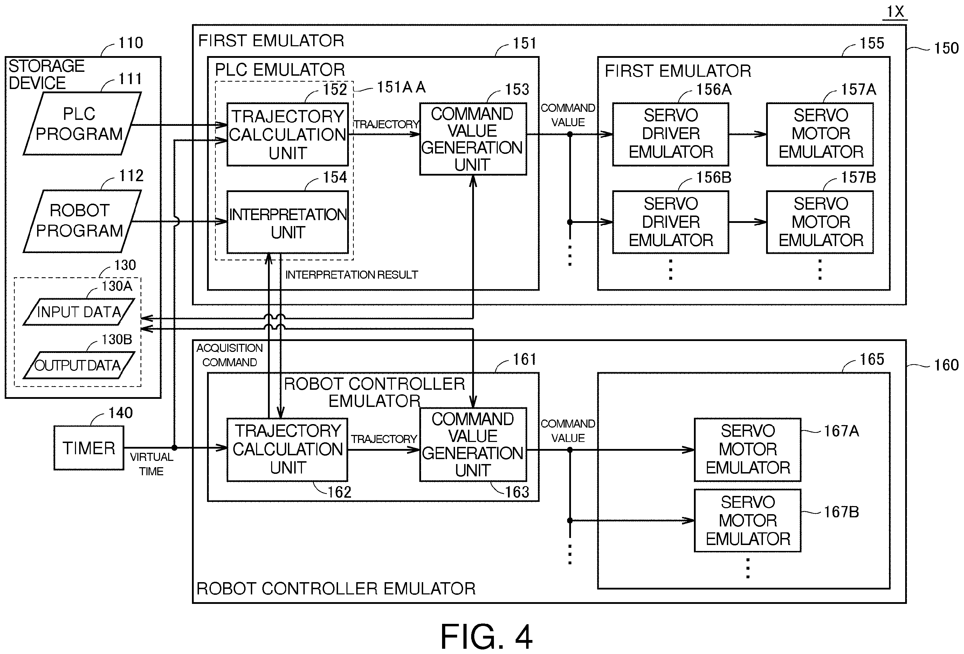

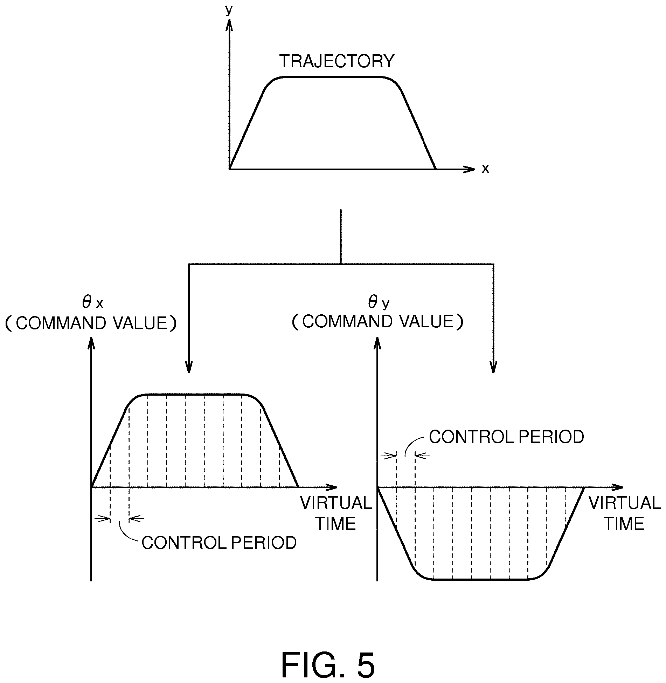

Hereinafter, a virtual FA system 1X configured of an emulator will be described with reference to FIGS. 4 and 5. FIG. 4 is a diagram illustrating an example of the configuration of the virtual FA system 1X.

As illustrated in FIG. 4, the virtual FA system 1X includes a storage device 110, a timer 140 for generating a virtual time, a first emulator 150, and a second emulator 160.

The storage device 110 stores different types of control programs for controlling the virtual FA system 1X, and the above-described shared data 130. In the example of FIG. 4, a PLC program 111 for controlling the first emulator 150 and a robot program 112 for controlling the second emulator 160 are stored in the storage device 110.

The first emulator 150 includes the PLC emulator 151 that simulates a behavior of the PLC 200 and the actuator emulator 155 that simulates a behavior of the driving device such as the moving table 600. The PLC emulator 151 includes an execution unit 151A and a command value generation unit 153. The actuator emulator 155 includes servo driver emulators 156A and 156B that simulate behaviors of the servo drivers 500A and 500B (see FIG. 3), and servo motor emulators 157A and 157B that simulate behaviors of the servo motors 601A and 601B (see FIG. 3).

The execution unit 151A executes the PLC program (a first control program) for controlling the actuator emulator 155 and the robot program 112 (a second control program) for controlling the actuator emulator 165.

The execution unit 151A includes a trajectory calculation unit 152 and an interpretation unit 154. The trajectory calculation unit 152 reads the PLC program 111 for driving the actuator emulator 155 on a simulation to generate a trajectory for driving the actuator emulator 155. The PLC program 111 is described in a cyclic execution type program language. For example, the PLC program 111 is described in a ladder language or a structured text (ST) language. The cyclic execution type refers to an execution form in which a group of instructions included in the program is repeatedly executed at each predetermined control period. That is, the trajectory calculation unit 152 repeatedly executes a group of instructions included in the PLC program 111 at each predetermined control period (first control period). For the control period, the virtual time generated by the timer 140 is used as a measure.

The PLC program 111 includes a movement instruction for moving the moving table 600 to the target position. When the trajectory calculation unit 152 executes the movement instruction included in the PLC program 111, the trajectory calculation unit 152 generates a trajectory for moving the control target of the actuator emulator 155 on a simulation. The trajectory is generated, for example, on the basis of a current position of the driving target and a target position included in the movement instruction. FIG. 5 is a diagram illustrating an example of the generated trajectory. In the example of FIG. 5, the trajectory on an xy plane is shown, but the generated trajectory may be one-dimensional or three-dimensional trajectory. The generated trajectory is output to the command value generation unit 153. The trajectory calculation unit 152 sends an instruction to interpret the next instruction to the interpretation unit 154 on the basis of the position of the arm robot 400 driven by the actuator emulator 165 having reached the target position.

The command value generation unit 153 generates a command value to be output to the actuator emulator 155 according to the generated trajectory. The command value is a control value for driving the servo motor emulators 157A and 157B on a simulation, and is indicated by, for example, a rotation angle, a rotation speed, or a position. In the example of FIG. 5, the command value generation unit 153 generates a rotation angle θx for the servo motor emulator 157A and a rotation angle θy for the servo motor emulator 157B as command values at each control period. Corresponding rotation angles θx and θy are sequentially output to the servo motor emulators 157A and 157B according to a current virtual time.

Typically, the command value generated by the command value generation unit 153 is generated on the basis of the input data 130A in the shared data 130. A state value of the actuator emulator 165 controlled by the robot controller emulator 161 is stored in the input data 130A. The state value described herein is information for specifying a current position of each part of the driving target (for example, the arm robot 400) of the actuator emulator 165 on the computer. For example, the state value includes a command value to be output to the actuator emulator 165, a rotation angle, a rotation speed, or a rotation acceleration of each servo motor that drives the arm robot 400, a position and angle of each joint of the arm robot 400, and the like. By generating the command value on the basis of such input data 130A, the command value generation unit 153 can control the position of the moving table 600 according to the current position of the arm robot 400 and cause the moving table 600 to cooperate with the arm robot 400 on a simulation.

The command value generation unit 153 updates the output data 130B in the shared data 130 with the data that is the predetermined collection target. As an example, the data that is the collection target includes a state value of a driving target (for example, the moving table 600) of the PLC emulator 151. The state value includes a command value to be output to the actuator emulator 155, a rotation angle, a rotation speed, or a rotation acceleration of each servo motor that drives the moving table 600, a coordinate value of the moving table 600, and the like.

The servo driver emulators 156A and 156B drive the servo motor emulators 157A and 157B on a simulation according to command values output from the command value generation unit 153.

The second emulator 160 includes the robot controller emulator 161 that simulates the behavior of the robot controller 300 and the actuator emulator 165 that simulates the behavior of the driving device of the arm robot 400. The robot controller emulator 161 includes a trajectory calculation unit 162 and a command value generation unit 163. The actuator emulator 165 includes servo motor emulators 167A and 167B that simulate the behaviors of the servo motors 440A and 440B illustrated in FIG. 3.

The interpretation unit 154 executes the robot program 112. The robot program 112 includes a group of instructions for driving the actuator emulator 165 (the second actuator emulator) on a simulation. The robot program 112 is described in a sequential execution robot language. The sequential execution type refers to an execution form in which the group of instructions included in the program is sequentially executed in a predetermined execution order. That is, the interpretation unit 154 sequentially executes the group of instructions included in the robot program 112 (a second control program) in a predetermined execution order. The group of instructions is executed according to the virtual time generated by the timer 140. In the example of FIG. 4, the interpretation unit 154 interprets the group of instructions included in the robot program 112 according to the predetermined execution order, and sequentially outputs interpretation results to the robot controller emulator 161.

When the interpretation results output from the interpretation unit 154 indicate a movement instruction, the trajectory calculation unit 162 generates a trajectory for moving a control target of the actuator emulator 165 on a simulation. The trajectory is generated on the basis of a current position of the driving target and a target position included in the movement instruction. The generated trajectory is output to the command value generation unit 163.

The command value generation unit 163 generates a command value to be output to the actuator emulator 165 according to the trajectory output from the trajectory calculation unit 162. The command value is a control value for driving the servo motor emulators 167A and 167B on a simulation and is indicated as, for example, virtual rotation angle, rotation speed, or position of the servo motor emulators 167A and 167B. Since a method of generating the command value for the actuator emulator 165 is the same as a method of generating the command value for the actuator emulator 155, description thereof will not be repeated.

Typically, the command value generated by the command value generation unit 163 is generated on the basis of the output data 130B in the shared data 130. A state value of the actuator emulator 165 controlled by the robot controller emulator 161 is stored in the output data 130B. The state value described herein is information for specifying a current position of each part of a driving target (for example, the moving table 600) of the actuator emulator 165 on a computer. As an example, the state value includes a command value to be output to the actuator emulator 165, a rotation angle, a rotation speed, or a rotation acceleration of each servo motor that drives the moving table 600, a coordinate value of the moving table 600, and the like. By generating the command value on the basis of such output data 130B, the command value generation unit 163 can control the position of the arm robot 400 according to a current position of the moving table 600, and can cause the arm robot 400 to cooperate with the moving table 600 on a simulation.

The command value generation unit 163 updates the input data 130A in the shared data 130 with the data that is the predetermined collection target. As an example, the data that is the collection target includes a state value of a driving target (for example, the arm robot 400) of the robot controller emulator 161. The state value includes a command value to be output to the actuator emulator 165, a rotation angle, a rotation speed, or a rotation acceleration of each servo motor that drives the arm robot 400, a position and angle of each joint of the arm robot 400, and the like.

The servo motor emulators 167A and 167B are driven on a simulation according to the command values output from the command value generation unit 163. It should be noted that the actuator emulator 165 may include a servo driver emulator, similar to the actuator emulator 155.

It should be noted that the PLC program 111 and the robot program 112 have been described above by way of example, but the control program that is an execution target of the information processing device 100 is not limited to the PLC program 111 and the robot program 112. Any control program is adopted as the control program as long as the control program is a control program written in a different type of program language.

### <E. Synchronous execution process of control program>

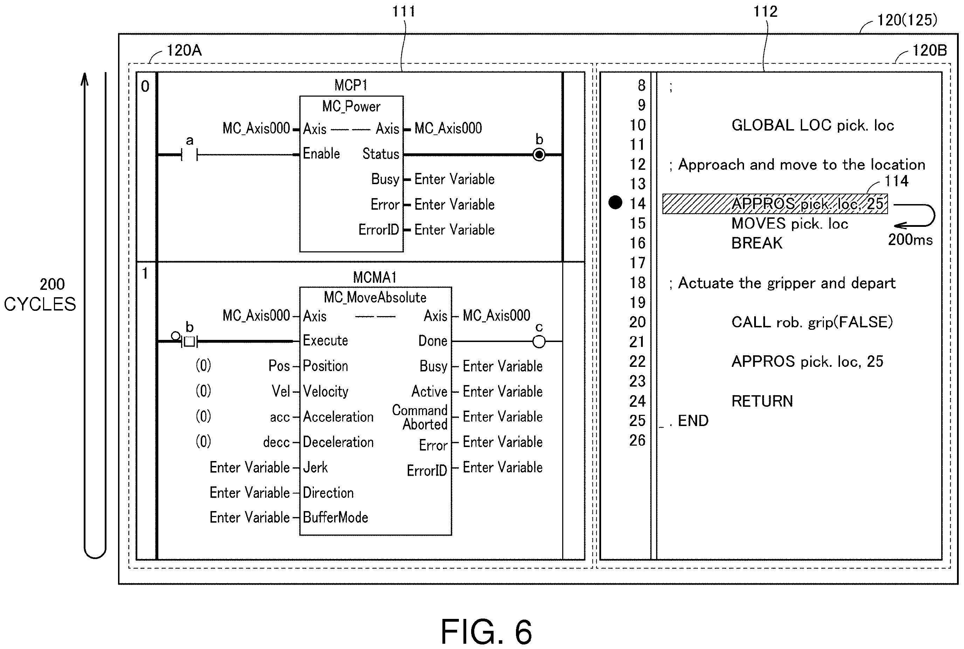

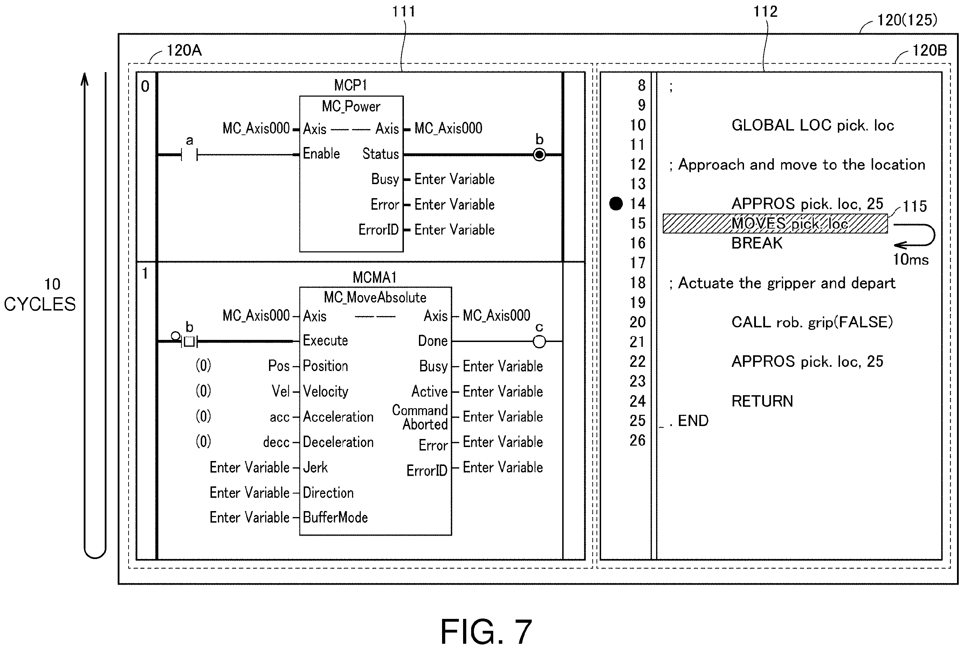

The PLC program 111 and the robot program 112 described above are synchronously executed. Accordingly, the information processing device 100 can cause a table driven according to the PLC program 111 and a robot driven according to the robot program 112 to cooperate with each other on a simulation. Hereinafter, the synchronous processes of the PLC program 111 and the robot program 112 will be described with reference to FIGS. 6 and 7.

FIGS. 6 and 7 are diagrams illustrating examples of an editing screen of the PLC program 111 and the robot program 112. An editing screen 125 of the PLC program 111 and the robot program 112 is displayed on a display unit 120 of the information processing device 100. The editing screen 125 includes an editing area 120A of the PLC program 111 and an editing area 120B for the robot program 112. The editing areas 120A and 120B are displayed side by side on one screen. Accordingly, a designer can design the PLC program 111 and the robot program 112 in parallel.

As described above, the PLC program 111 is the cyclic execution type program. Therefore, the PLC emulator 151 (see FIG. 4) repeatedly executes a group of instructions included in the PLC program 111 at each predetermined control period. More specifically, the PLC emulator 151 executes a beginning to an end of the PLC program 111 in one control period. In the next control period, the PLC emulator 151 executes the beginning to the end of the PLC program 111 again.

On the other hand, the robot program 112 is a sequential execution type program. Therefore, the interpretation unit 154 (see FIG. 4) sequentially interprets a group of instructions included in the robot program 112 in a predetermined execution order. As a result, the robot controller emulator 161 executes the robot program 112 line by line sequentially from the top. In this case, the interpretation unit 154 does not interpret instructions in the next line until execution of instructions of each line is completed. More specifically, on the basis of the completion of execution of a current instruction, the robot controller emulator 161 feeds back this fact to the interpretation unit 154. The interpretation unit 154 receives this feedback and interprets the instructions of the next line.

In order to synchronously execute the PLC program 111 and the robot program 112 from such a difference between the execution forms, it is necessary for the group of instructions in the PLC program 111 and the group of instructions included in the robot program 112 to be executed at synchronized control periods.

In order to realize the synchronous execution, the interpretation unit 154 calculates the execution time required for execution of the instruction for each instruction included in the robot program 112 (the second control program). The execution time described herein may be represented by an index correlated with the time required for execution of the instructions included in the robot program 112. For example, the execution time may be represented by, for example, the number of cycles of the control period required for execution of each instruction included in the robot program 112. For the number of cycles, the virtual time of the timer 140 is used as a measure. A unit of the virtual time is represented by, for example, "ms". In the example of FIG. 6, the number of cycles of "200 ms" is specified for the robot instruction 114 shown in a 14th line of the robot program 112. "APPROS pick. loc, 25" indicated in the robot instruction 114 is a movement instruction for moving the arm robot 400 to a target position "25". By the interpretation unit 154 interpreting the movement instruction, "200 ms" is specified as the number of cycles of the control period required to operate the arm robot 400 to the target position.

The PLC emulator 151 repeatedly executes the group of instructions included in the PLC program 111 for a time "200 ms" required for execution of the robot instruction 114 while the robot controller emulator 161 is executing the robot instruction 114. As an example, when the control period of the PLC program 111 is "1 ms", the PLC emulator 151 repeatedly executes the PLC program 111 for 200 cycles (= 200 ms/1 ms) while the robot instruction 114 is being executed.

After the PLC emulator 151 repeats the group of instructions included in the PLC program 111 by the execution time required for execution of the robot instruction 114, the robot controller emulator 161 starts execution of the next instruction of the robot instruction 114. An example thereof is illustrated in FIG. 7. In the example of FIG. 7, the interpretation unit 154 switches the control from the robot instruction 114 to the robot instruction 115. "MOVES pick. loc" indicated in the robot instruction 115 is a movement instruction for moving the arm robot 400 to the target position "pick. loc". By the interpretation unit 154 interpreting the robot instruction 115, an execution time "10 ms" required for operating the arm robot 400 to the target position is specified. The execution time is specified before the start of execution of the robot instruction 115 or at the time of the start of execution.

Thereafter, the PLC emulator 151 repeatedly executes the group of instructions included in the PLC program 111 for the time "10 ms" required for execution of the robot instruction 115 while the interpretation unit 154 is executing the robot instruction 115. As an example, when the control period of the PLC program 111 is "1 ms", the PLC emulator 151 repeatedly executes the PLC program 111 for 10 cycles (= 10 ms/1 ms) while the robot instruction 115 is being executed.

### <F. Synchronous output process of command value>

In order to simulate a communication mode in EtherCAT, the PLC emulator 151 (see FIG. 4) outputs a command value to the actuator emulator 155 at each predetermined control period according to a communication period of EtherCAT. Similarly, the robot controller emulator 161 (see FIG. 4) outputs a command value to the actuator emulator 165 at each predetermined control period according to the communication period of EtherCAT. Thus, it is possible to simulate the operation of the FA system 1 in the same communication mode as the communication mode of an actual system.

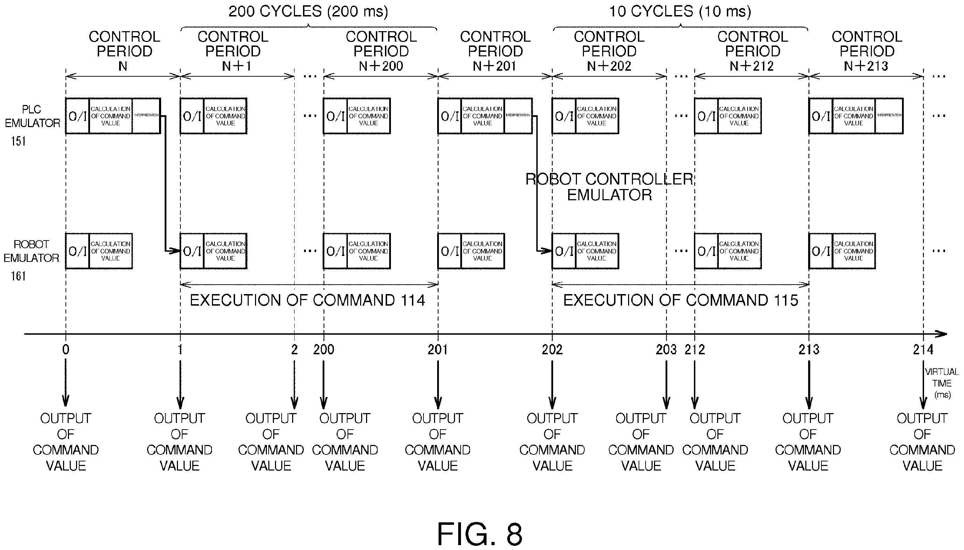

FIG. 8 is a diagram illustrating a process of synchronizing output timings of command values for actuator emulators 155 and 165 (see FIG. 4). Hereinafter, a process of synchronizing output timings of command values will be described by taking a process of executing the robot instructions 114 and 115 (see FIGS. 6 and 7) included in the robot program 112 as an example.

In a control period "N", the PLC emulator 151 sequentially executes an output/input (O/I) process, a command value calculation process, and an interpretation process. Through the "O/I process" of the PLC emulator 151, the data that is the predetermined collection target is written to the output data 130B in the shared data 130, and the input data 130A in the shared data 130 is acquired as information that is used for a command value calculation process at this time. Through the "command value calculation process" of the PLC emulator 151, a command value for the actuator emulator 155 is calculated on the basis of the acquired input data 130A. Through the "interpretation process" of the PLC emulator 151, a line that is an execution target of the robot program 112 is interpreted. In the example of FIG. 8, "200 ms" is specified as an execution time of the robot instruction 114 included in the robot program 112 through this interpretation process.

Similarly, in the control period "N", the robot controller emulator 161 sequentially executes an O/I process and a command value calculation process. Through the "O/I process" of the robot controller emulator 161, data that is a predetermined collection target is written to the input data 130A in the shared data 130, and the output data 130B in the shared data 130 is acquired as information necessary for a command value calculation process at this time. Through the "command value calculation process" of the robot controller emulator 161A, a command value for the actuator emulator 165 is calculated on the basis of the acquired output data 130B.

The PLC emulator 151 repeatedly executes the PLC program 111 for an execution time "200 ms" of the robot instruction 114 while the robot controller emulator 161 is executing the robot instruction 114. When the control period is "1 ms", the PLC emulator 151 executes the PLC program 111 for 200 cycles (= 200 ms/1 ms). Meanwhile, the PLC emulator 151 executes the Oil process and the command value calculation process at each control period "1 ms", and outputs the command value to the actuator emulator 155 at each control period "1 ms".

On the other hand, the robot controller emulator 161 executes the O/I process and command value calculation process at each predetermined control period while executing the robot instruction 114. When the control period is "1 ms", the robot controller emulator 161 executes the O/I process and the command value calculation process at each control period "1 ms" and outputs the command value to the actuator emulator 165 at each control period "1 ms".

In the control period "N + 200" after "200 ms" from the execution of the robot instruction 114, the execution of the robot instruction 114 is completed. The PLC emulator 151 executes a process of interpreting the next robot instruction 115 in the next control period "N + 201". In the example of FIG. 8, "10 ms" is specified as the execution time of the robot instruction 115 through this interpretation process.

The PLC emulator 151 repeatedly executes the PLC program 111 for the execution time "10 ms" of the robot instruction 115 while the robot controller emulator 161 is executing the robot instruction 115. When the control period is "1 ms", the PLC emulator 151 executes the PLC program 111 for 10 cycles (= 10 ms/1 ms). Meanwhile, the PLC emulator 151 executes the O/I process and the command value calculation process, and outputs the command value to the actuator emulator 155 at each control period "1 ms".

Meanwhile, the robot controller emulator 161 executes the O/I process and the command value calculation process at each predetermined control period while the robot instruction 115 is being executed. When the control period is "1 ms", the robot controller emulator 161 executes the O/I process and the command value calculation process at each control period "1 ms", and outputs the command value to the actuator emulator 165 at each control period "1 ms".

Thus, the command value is output to each of the actuator emulators 155 and 165 in a state in which the PLC emulator 151 and the robot controller emulator 161 are synchronized with each other, such that different types of control targets (for example, an arm robot and a moving table) can be synchronized with each other.

It should be noted that although the example in which the control period of the PLC emulator 151 and the control period of the robot controller emulator 161 are the same has been described above, but these control periods may be different as long as the control periods are synchronized with each other. As an example, one of the control periods may be an integral multiple of the other control period. For example, the control period of the PLC emulator 151 may be "1 ms", and the control period of the robot controller emulator 161 may be "2 ms" or "4 ms".

Further, although the example in which the control period of the PLC emulator 151 and the control period of the robot controller emulator 161 are synchronized with each other has been described above, the control periods may not be synchronized with each other. That is, the PLC emulator 151 and the robot controller emulator 161 may asynchronously control the actuator emulators 155 and 165, respectively.

### <G. Simulation screen>

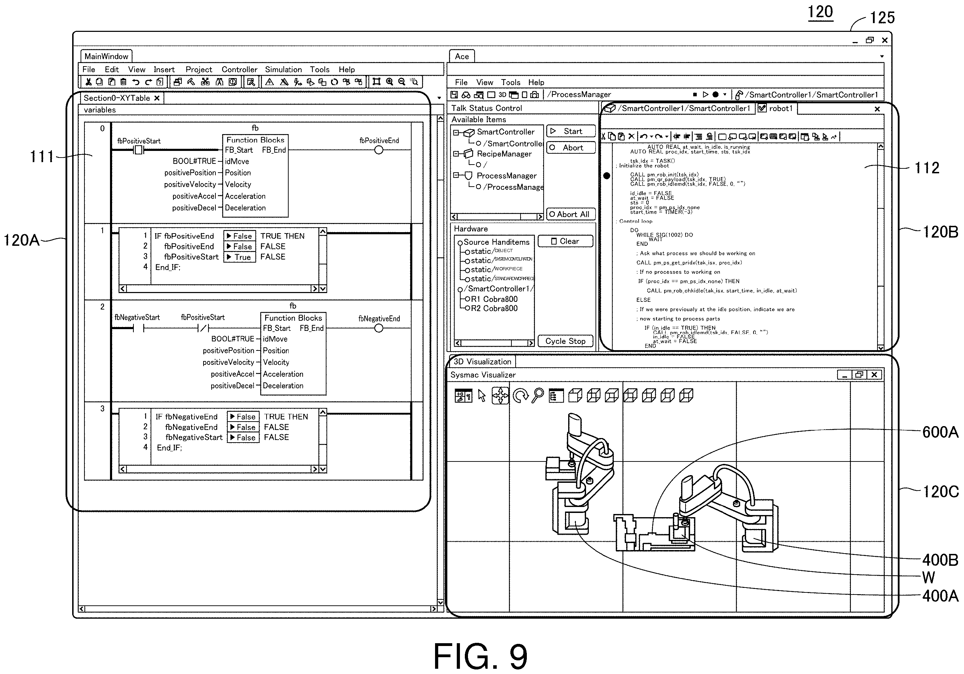

FIG. 9 is a diagram illustrating an example of a simulation screen in the information processing device 100. An example of the simulation screen for realizing synchronization simulation will be described with reference to FIG. 9.

The editing screen 125 for editing the PLC program 111 and the robot program 112 is shown on the display unit 120 of the information processing device 100. The editing screen 125 includes an editing area 120A for the PLC program 111, an editing area 120B for the robot program 112, and a display area 120C for displaying a behavior of a driving target such as the arm robot or the moving table in the simulation in real time.

Robot images 400A and 400B representing the arm robot 400 that is an actual machine and a moving table image 600A representing the moving table 600 that is an actual machine are shown in the display area 120C. The robot images 400A and 400B or the moving table image 600A are generated from, for example, computer aided design (CAD) data. As an example, the information processing device 100 has a function of importing CAD data for a three-dimensional shape, and reads CAD data of the arm robot 400 and CAD data of the moving table 600 using this importing function. When synchronization simulation is performed on two arm robots 400 and one moving table 600, the information processing device 100 generates three-dimensional data of the two arm robots from the CAD data of the arm robot 400, and generates three-dimensional data of the one moving table from the CAD data of the moving table 600.

As in the example of FIG. 9, when the simulation is performed on the one moving table 600 and the two arm robots 400, one first emulator 150 and two second emulators 160 are used. As described above, the first emulator 150 and the second emulators output command values to the corresponding actuator emulators according to the synchronized control periods. The information processing device 100 sequentially updates respective pieces of the three-dimensional data of the arm robots and sequentially updates the three-dimensional data of the moving table on the basis of the sequentially output command values. The information processing device 100 sequentially updates the display of the robot images 400A and 400B from the respective pieces of three-dimensional data of the arm robots to be sequentially updated. In synchronization with this, the information processing device 100 sequentially updates the display of the moving table image 600A from the three-dimensional data of the moving table to be sequentially updated.

Accordingly, the display of the robot images 400A, 400B and the display of the moving table image 600A are synchronously updated according to the execution of the PLC program 111 and the robot program 112. As a result, the designer can easily confirm whether or not the PLC program 111 and the robot program 112 operate as intended and can easily debug the PLC program 111 and the robot program 112.

### <H. Hardware configuration of information processing device 100>

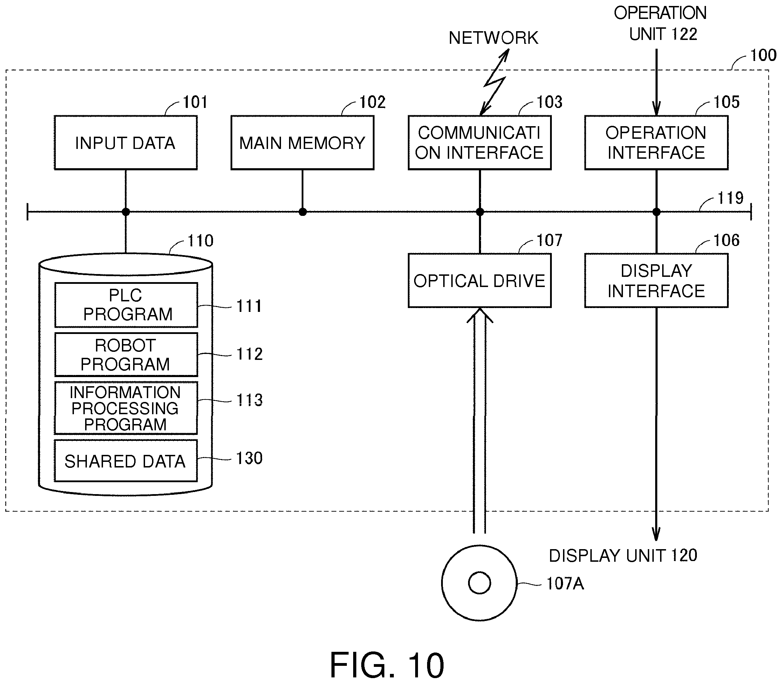

A hardware configuration of the information processing device 100 will be described with reference to FIG. 10. FIG. 10 is a schematic diagram illustrating a hardware configuration of the information processing device 100.

The information processing device 100 includes, for example, a computer configured according to a general-purpose computer architecture. The information processing device 100 includes a control device 101, a main memory 102, a communication interface 103, an operation interface 105, a display interface 106, an optical drive 107, and a storage device 110 (storage unit). These components are communicably connected to each other via an internal bus 119.

The control device 101 is configured of, for example, at least one integrated circuit. The integrated circuit is configured of, for example, at least one central processing unit (CPU), at least one application specific integrated circuit (ASIC), at least one field programmable gate array (FPGA), or a combination thereof. The control device 101 realizes various processes according to the embodiment by developing the program in the main memory 102 and executing the program. The main memory 102 is configured of a volatile memory and functions as a work memory necessary for program execution of the control device 101.

The communication interface 103 exchanges data with an external device via a network. The external device includes, for example, the above-described PLC 200 (see FIG. 3), a server, or other communication devices. The information processing device 100 may be configured to be able to download an information processing program 113 via the communication interface 103. The information processing program 113 is a program for providing an integrated development environment of the PLC program 111 or the robot program 112 and provides a function such as the above-described synchronization simulation process.

The operation interface 105 is connected to the operation unit 122, and captures a signal indicating a user operation from the operation unit 122. The operation unit 122 typically includes a keyboard, a mouse, a touch panel, a touch pad, and the like, and receives an operation from a user. The designer can edit the PLC program 111 or the robot program 112 using the operation unit 122.

The display interface 106 is connected to the display unit 120 and sends an image signal for displaying an image to the display unit 120 according to a command from the control device 101 or the like. The display unit 120 includes a display, an indicator, or the like, and presents various pieces of information to the user.

The optical drive 107 reads various programs stored in, for example, an optical disc 107A from the optical disc 107A and installs the programs in the storage device 110.

FIG. 10 illustrates an example of a configuration in which necessary programs are installed in the information processing device 100 via the optical drive 107, but the disclosure is not limited thereto, and the programs may be downloaded from a server device or the like on a network. Alternatively, a configuration in which a program on the information processing device 100 may be rewritten by a program written to a storage medium such as a universal serial bus (USB) memory, a secure digital (SD) card, or a compact flash (CF) may be adopted.

The storage device 110 is, for example, a hard disk or an external storage medium. As an example, the storage device 110 stores the PLC program 111, the robot program 112, the information processing program 113, and the shared data 130. The information processing program 113 may be provided by being incorporated in a part of an arbitrary program, not as a single program. In this case, the synchronization process according to the embodiment is realized in cooperation with the arbitrary program. Further, some or all of the functions provided by the information processing program 113 according to the embodiment may be realized by dedicated hardware. Further, the information processing device 100 may be configured in the form of a so-called cloud service in which at least one server realizes a synchronization process according to the embodiment.

### <I. Control structure of information processing device 100>

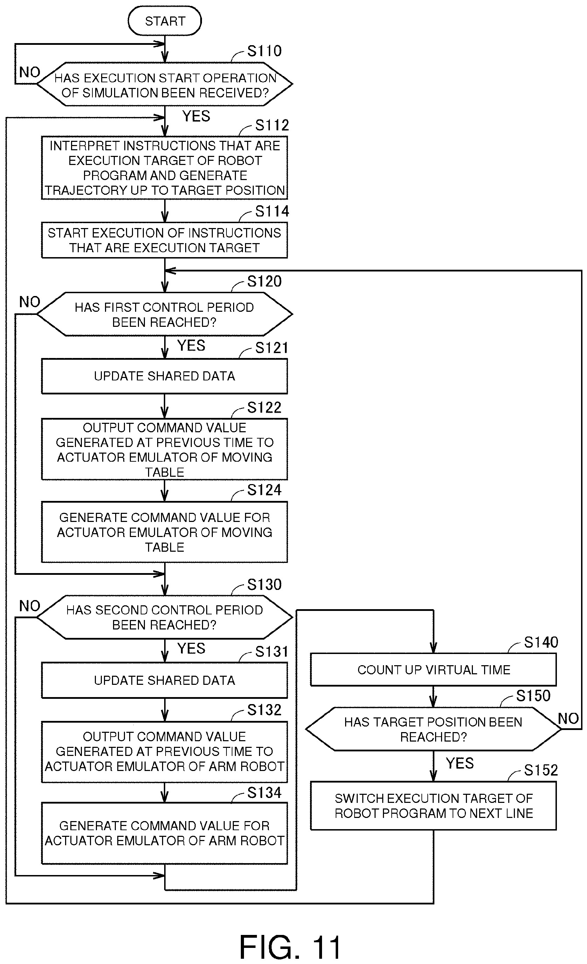

A control structure of the information processing device 100 will be described with reference to FIG. 11. FIG. 11 is a flowchart showing a part of a process that is executed by the control device 101 of the information processing device 100. The process in FIG. 11 is realized by the control device 101 executing the program. In other aspects, a part or all of the process may be executed by circuit elements or other hardware.

In step S110, the control device 101 determines whether an execution start operation of synchronization simulation has been received. As an example, the control device 101 determines that the execution start operation of the synchronization simulation has been received on the basis of an execution button of the synchronization simulation in the editing screen 125 (see FIG. 9) being pressed. When the control device 101 determines that the execution start operation of the synchronization simulation has been received (YES in step S110), the control device 101 switches the control to step S112. Otherwise (NO in step S110), the control device 101 executes the process of step S110 again.

In step S112, the control device 101, as the above-described interpretation unit 154 (see FIG. 4), interprets the robot instruction shown in a line that is an execution target of the robot program 112, and executes trajectory calculation for driving the actuator emulator 155 on a simulation. The number of cycles required for execution of the robot instruction shown in the line that is the execution target is specified from a calculation result.

In step S114, the control device 101 functions as a robot controller emulator 161 that simulates the operation of the robot controller 300 and starts execution of the robot instruction that is the execution target.

In step S120, the control device 101 determines whether a predetermined first control period is reached on the basis of the virtual time indicated by the timer 140. When the control device 101 determines that the predetermined first control period is reached (YES in step S120), the control device 101 switches the control to step S121. Otherwise (NO in step S120), the control device 101 switches control to step S130.

In step S121, the control device 101 updates the output data 130B in the shared data 130 with the data that is the predetermined collection target. Typically, the data that is the collection target is designated in advance. As an example, the data that is the collection target includes a state value of a driving target (for example, the moving table 600) of the PLC emulator 151. The state value includes a command value to be output to the actuator emulator 155, a rotation angle, a rotation speed, or a rotation acceleration of each servo motor that drives the moving table 600, a coordinate value of the moving table 600, and the like.

In step S122, the control device 101 outputs the command value generated in step S124 at previous time to the actuator emulator 155 of the moving table 600. That is, the command value generated in the subsequent step S124 is output to the actuator emulator 155 when step S122 is to be next executed.

In step S124, the control device 101, as the command value generation unit 153 described above (see FIG. 4), generates a command value to be output to the actuator emulator 155 of the moving table 600 on the basis of the input data 130A in the shared data 130.

In step S130, the control device 101 determines whether a predetermined second control period is reached on the basis of the virtual time indicated by the timer 140. It should be noted that when the first control period in step S120 is equal to the second control period in step S130, the determination process in step S130 may be omitted. When the control device 101 determines that the predetermined second control period is reached (YES in step S130), the control device 101 switches the control to step S131. Otherwise (NO in step S130), the control device 101 switches control to step S140.

In step S131, the control device 101 updates the input data 130A in the shared data 130 with the data that is the predetermined collection target. Typically, the data that is the collection target is designated in advance. As an example, the data that is the collection target includes a state value of a driving target (for example, the arm robot 400) of the robot controller emulator 161. The state value includes a command value to be output to the actuator emulator 165, a rotation angle, a rotation speed, or a rotation acceleration of each servo motor that drives the arm robot 400, a position and an angle of each joint of the arm robot 400, and the like.

In step S132, the control device 101 outputs the command value generated in step S134 at previous time to the actuator emulator 165 of the arm robot 400. That is, the command value generated in the subsequent step S134 is output to the actuator emulator 165 when step S132 is to be next executed.

In step S134, the control device 101, as the command value generation unit 163 described above (see FIG. 4), generates a command value to be output to the actuator emulator 155 of the arm robot 400 on the basis of the output data 130B of the shared data 130. Since a method of generating the command value is as described in FIG. 5, description thereof will not be repeated.

In step S140, the control device 101 counts up the virtual time of the timer 140. The virtual time is incremented by 1 ms, for example.

In step S150, the control device 101 determines whether the position of the arm robot driven on a simulation by the actuator emulator 165 has reached the target position on the basis of the number of cycles specified in step S112. When the control device 101 determines that the position of the arm robot driven on a simulation by the actuator emulator 165 has reached the target position (YES in step S150), the control device 101 switches the control to step S152. Otherwise (NO in step S150), the control device 101 causes control to return to step S120.

In step S152, the control device 101, as the interpretation unit 154, switches the line that is the execution target in the robot program 112 to the next line.

### <1. Conclusion>

As described above, the storage device 110 of the information processing device 100 stores the shared data 130 that is shared between the PLC emulator 151 and the robot controller emulator 161. The PLC emulator 151 calculates the command value for the actuator emulator 155 using the input data 130A in the shared data 130 as an input at predetermined first control periods. Further, the PLC emulator 151 updates the output data 130B in the shared data 130 with the data that is the predetermined collection target at each first control period.

Meanwhile, the robot controller emulator 161 calculates the command value for the actuator emulator 165 using the output data 130B in the shared data 130 as an input at predetermined second control periods. Further, the robot controller emulator 161 updates the input data 130A in the shared data 130 with the data that is the predetermined collection target at each second control period.

Thus, the PLC emulator 151 acquires the input data 130A and updates the output data 130B at each first control period, and the robot controller emulator 161 acquires the output data 130B and updates the input data 130A at each second control period. Accordingly, the information processing device 100 can realize data exchange between the PLC emulator 151 and the robot controller emulator 161 in the same manner as data exchange on the field network. By reproducing a communication mode of the field network on the computer, the information processing device 100 can accurately simulate the behavior of the FA system.

### [Reference Signs List]

1: FA system
1X: Virtual FA system
100: Information processing device
101: Control device
102: Main memory
103: Communication interface
105: Operation interface
106: Display interface
107: Optical drive
107A: Optical disc
110: Storage device
111: PLC program
112: Robot program
113: Information processing program
114, 115: Robot instruction
119: Internal bus
120: Display unit
120A, 120B: Editing area
120C: Display area
122: Operation unit
125: Editing screen
130: Shared data
130A: Input data
130B: Output data
140: Timer
150: First emulator
151: PLC Emulator
151A: Execution unit
152, 162: Trajectory calculation unit
153, 163: Command value generation unit
154: Interpretation unit
155, 165: Actuator emulator
156A, 156B: Servo driver emulator
157A, 157B, 167A, 167B: Servomotor emulator
160: Second emulator
161: Robot controller emulator
300: Robot Controller
400: Arm robot
400A, 400B: Robot image
420: Base
424: First arm
428: Second arm
432: End effector
440, 440A, 440B, 440C, 440D, 601, 601A, 601B: Servomotor
500, 500A, 500B: Servo driver
600: Moving table
600A: Moving table image
602: Installation base

## Claims

1. An information processing device (100), comprising:
a first actuator emulator (155), simulating a behavior of a first driving device according to an input first command value;
a second actuator emulator (165), simulating a behavior of a second driving device (400) cooperating with the first driving device (600) according to an input second command value;
a first controller emulator (151), simulating a behavior of a first controller that controls the first driving device (600) by outputting the first command value to the first actuator emulator (155);
a second controller emulator (161), simulating a behavior of a second controller that controls the second driving device (400) by outputting the second command value to the second actuator emulator (165); and
a storage device (110), storing first data (130A) and second data (130B) shared between the first controller emulator (151) and the second controller emulator (161),
the information processing device (100) being **characterized in that**
the first controller emulator (151) calculates the first command value using the first data (130A) as an input at each predetermined first control period according to a communication period between the first controller and the second controller and updates the second data (130B) with data that is a predetermined collection target representing a behavior of the first actuator emulator (155) at each first control period,
the second controller emulator (161) calculates the second command value using the second data (130B) as an input and updates the first data (130A) with data that is a predetermined collection target representing a behavior of the second actuator emulator (165) at each predetermined second control period according to the communication period,
the data that is the collection target of the first controller emulator (151) includes a state value of the first actuator emulator (155),
the data that is the collection target of the second controller emulator (161) includes a state value of the second actuator emulator (165),
the first controller emulator (151) calculates the first command value on the basis of the state value of the second actuator emulator (165) and updates the second data with a current state value of the first actuator emulator (155) at each first control period, and
the second controller emulator (161) calculates the second command value on the basis of the state value of the first actuator emulator (155) and updates the first data with a current state value of the second actuator emulator (165) at each second control period.

2. The information processing device (100) according to claim 1, further comprising a timer (140) for generating a virtual time,
wherein the first control period and the second control period are synchronized by the virtual time.

3. The information processing device (100) according to any one of claims 1 to 2,
wherein the storage device (110) further stores a first control program (111) for controlling the first controller emulator (151) and a second control program (112) for controlling the second controller emulator (161), and
a type of the first control program (111) is different from a type of the second control program (112).

4. The information processing device (100) according to claim 3,
wherein the first control program (111) is a cyclic execution type program, and
the second control program (112) is a sequential execution type program.

5. An information processing method, comprising:
controlling a first actuator emulator (155) that simulates a behavior of a first driving device (600) according to an input first command value;
controlling a second actuator emulator (165) that simulates a behavior of a second driving device (400) cooperating with the first driving device (600) according to an input second command value;
controlling a first controller emulator (151) that simulates a behavior of a first controller that controls the first driving device (600) by outputting the first command value to the first actuator emulator (155);
controlling a second controller emulator (161) that simulates a behavior of a second controller that controls the second driving device (400) by outputting the second command value to the second actuator emulator (165); and
preparing first data (130A) and second data (130B) that are shared between the first controller emulator (151) and the second controller emulator (161),
the method being **characterized in that**
the step of controlling the first controller emulator (151) includes calculating the first command value using the first data (130A) as an input at each predetermined first control period according to a communication period between the first controller and the second controller and updating the second data (130B) with data that is a predetermined collection target regarding a behavior of the first actuator emulator (155) at each first control period,
the step of controlling the second controller emulator (161) includes calculating the second command value using the second data (130B) as an input and updating the first data with data that is a predetermined collection target regarding a behavior of the second actuator emulator (165) at each predetermined second control period according to the communication period,
the data that is the collection target of the first controller emulator (151) includes a state value of the first actuator emulator (155),
the data that is the collection target of the second controller emulator (161) includes a state value of the second actuator emulator (165),
the first controller emulator (151) calculates the first command value on the basis of the state value of the second actuator emulator (165) and updates the second data with a current state value of the first actuator emulator (155) at each first control period, and
the second controller emulator (161) calculates the second command value on the basis of the state value of the first actuator emulator (155) and updates the first data with a current state value of the second actuator emulator (165) at each second control period.

6. An information processing program, wherein the information processing program is executed by a computer to perform steps of:
controlling a first actuator emulator (155) that simulates a behavior of a first driving device (600) according to an input first command value;
controlling a second actuator emulator (165) that simulates a behavior of a second driving device (400) cooperating with the first driving device (600) according to an input second command value;
controlling a first controller emulator (151) that simulates a behavior of a first controller that controls the first driving device (600) by outputting the first command value to the first actuator emulator (155);
controlling a second controller emulator (161) that simulates a behavior of a second controller that controls the second driving device (400) by outputting the second command value to the second actuator emulator (165); and
preparing first and second data that are shared between the first controller emulator and the second controller emulator,
the information processing program being **characterized in that**
the step of controlling the first controller emulator (151) includes calculating the first command value using the first data (130A) as an input at each predetermined first control period according to a communication period between the first controller and the second controller and updating the second data (130B) with data that is a predetermined collection target regarding a behavior of the first actuator emulator (155) at each first control period,
the step of controlling the second controller emulator (161) includes calculating the second command value using the second data (130B) as an input and updating the first data (130A) with data that is a predetermined collection target regarding a behavior of the second actuator emulator (165) at each predetermined second control period according to the communication period,
the data that is the collection target of the first controller emulator (151) includes a state value of the first actuator emulator (155),
the data that is the collection target of the second controller emulator (161) includes a state value of the second actuator emulator (165),
the first controller emulator (151) calculates the first command value on the basis of the state value of the second actuator emulator (165) and updates the second data with a current state value of the first actuator emulator (155) at each first control period, and
the second controller emulator (161) calculates the second command value on the basis of the state value of the first actuator emulator (155) and updates the first data with a current state value of the second actuator emulator (165) at each second control period.

## Patentansprüche

1. Informationsverarbeitungsvorrichtung (100), die umfasst:
einen ersten Aktuator-Emulator (155), der ein Verhalten einer ersten Antriebsvorrichtung gemäß einem eingegebenen ersten Befehlswert simuliert;
einen zweiten Aktuator-Emulator (165), der ein Verhalten einer zweiten Antriebsvorrichtung (400) simuliert, die mit der ersten Antriebsvorrichtung (600) gemäß einem eingegebenen zweiten Befehlswert zusammenarbeitet;
einen ersten Steuerungsemulator (151), der ein Verhalten einer ersten Steuerung simuliert, die die erste Antriebsvorrichtung (600) steuert, durch Ausgeben des ersten Befehlswerts an den ersten Aktuator-Emulator (155);
einen zweiten Steuerungsemulator (161), der ein Verhalten einer zweiten Steuerung simuliert, die die zweite Antriebsvorrichtung (400) steuert, durch Ausgeben des zweiten Befehlswerts an den zweiten Aktuator-Emulator (165); und
eine Speichervorrichtung (110), die erste Daten (130A) und zweite Daten (130B) speichert, die von dem ersten Steuerungsemulator (151) und dem zweiten Steuerungsemulator (161) gemeinsam genutzt werden,
wobei die Informationsverarbeitungsvorrichtung (100) **dadurch gekennzeichnet ist, dass**
der erste Steuerungsemulator (151) den ersten Befehlswert unter Verwendung der ersten Daten (130A) als eine Eingabe bei jeder vorbestimmten ersten Steuerungsperiode gemäß einer Kommunikationsperiode zwischen der ersten Steuerung und der zweiten Steuerung berechnet und die zweiten Daten (130B) mit Daten aktualisiert, die ein vorbestimmtes Sammelziel sind, das ein Verhalten des ersten Aktuator-Emulators (155) bei jeder ersten Steuerungsperiode darstellt, und
der zweite Steuerungsemulator (161) den zweiten Befehlswert unter Verwendung der zweiten Daten (130B) als eine Eingabe berechnet und die ersten Daten (130A) mit Daten aktualisiert, die ein vorbestimmtes Sammelziel sind, das ein Verhalten des zweiten Aktuator-Emulators (165) bei jeder vorbestimmten zweiten Steuerungsperiode gemäß der Kommunikationsperiode darstellt,
wobei die Daten, die das Sammelziel des ersten Steuerungsemulators (151) sind, einen Zustandswert des ersten Aktuator-Emulators (155) enthalten,
die Daten, die das Sammelziel des zweiten Steuerungsemulators (161) sind, einen Zustandswert des zweiten Aktuator-Emulators (165) enthalten,
der erste Steuerungsemulator (151) den ersten Befehlswert basierend auf dem Zustandswert des zweiten Aktuator-Emulators (165) berechnet und die zweiten Daten mit einem aktuellen Zustandswert des ersten Aktuator-Emulators (155) bei jeder ersten Steuerungsperiode aktualisiert, und
der zweite Steuerungsemulator (161) den zweiten Befehlswert basierend au dem Zustandswert des ersten Aktuator-Emulators (155) berechnet und die ersten Daten mit einem aktuellen Zustandswert des zweiten Aktuator-Emulators (165) bei jeder zweiten Steuerungsperiode aktualisiert.

2. Informationsverarbeitungsvorrichtung (100) gemäß Anspruch 1, ferner umfassend einen Timer (140) zur Erzeugung einer virtuellen Zeit,
wobei die erste Steuerungsperiode und die zweite Steuerungsperiode durch die virtuelle Zeit synchronisiert sind.

3. Informationsverarbeitungsvorrichtung (100) gemäß einem der Ansprüche 1 bis 2,
wobei die Speichervorrichtung (110) ferner ein erstes Steuerprogramm (111) zur Steuerung des ersten Steuerungsemulators (151) und ein zweites Steuerprogramm (112) zur Steuerung des zweiten Steuerungsemulators (161) speichert, und
ein Typ des ersten Steuerprogramms (111) von einem Typ des zweiten Steuerprogramms (112) verschieden ist.

4. Informationsverarbeitungsvorrichtung (100) gemäß Anspruch 3,
wobei das erste Steuerprogramm (111) ein zyklisches Ausführungstyp-Programm ist, und
das zweite Steuerprogramm (112) ein sequentielles Ausführungstyp-Programm ist.

5. Informationsverarbeitungsverfahren, umfassend:
Steuern eines ersten Aktuator-Emulators (155), der ein Verhalten einer ersten Antriebsvorrichtung (600) gemäß einem eingegebenen ersten Befehlswert simuliert;
Steuern eines zweiten Aktuator-Emulators (165), der ein Verhalten einer zweiten Antriebsvorrichtung (400), die mit der ersten Antriebsvorrichtung (600) zusammenarbeitet, gemäß einem eingegebenen zweiten Befehlswert simuliert;
Steuern eines ersten Steuerungs-Emulators (151), der ein Verhalten einer ersten Steuerung simuliert, die die erste Antriebsvorrichtung (600) steuert, durch Ausgeben des ersten Befehlswerts an den ersten Aktuator-Emulator (155);
Steuern eines zweiten Steuerungsemulators (161), der ein Verhalten einer zweiten Steuerung simuliert, die die zweite Antriebsvorrichtung (400) steuert, durch Ausgeben des zweiten Befehlswerts an den zweiten Aktuator-Emulator (165); und
Vorbereiten von ersten Daten (130A) und zweiten Daten (130B), die von dem ersten Steuerungsemulator (151) und dem zweiten Steuerungsemulator (161) gemeinsam genutzt werden,
wobei das Verfahren **dadurch gekennzeichnet ist, dass**
der Schritt des Steuerns des ersten Steuerungsemulators (151) Berechnen des ersten Befehlswertes unter Verwendung der ersten Daten (130A) als eine Eingabe bei jeder vorbestimmten ersten Steuerungsperiode gemäß einer Kommunikationsperiode zwischen der ersten Steuerung und der zweiten Steuerung und Aktualisieren der zweiten Daten (130B) mit Daten, die ein vorbestimmtes Sammelziel bezüglich eines Verhaltens des ersten Aktuator-Emulators (155) sind, bei jeder ersten Steuerungsperiode enthält,
der Schritt des Steuerns des zweiten Steuerungsemulators (161) Berechnen des zweiten Befehlswertes unter Verwendung der zweiten Daten (130B) als eine Eingabe und Aktualisieren der ersten Daten mit Daten, die ein vorbestimmtes Sammelziel bezüglich eines Verhaltens des zweiten Aktuator-Emulators (165) sind, bei jeder vorbestimmten zweiten Steuerungsperiode gemäß der Kommunikationsperiode enthält,
die Daten, die das Sammelziel des ersten Steuerungsemulators (151) sind, einen Zustandswert des ersten Aktuator-Emulators (155) enthalten,
die Daten, die das Sammelziel des zweiten Steuerungsemulators (161) sind, einen Zustandswert des zweiten Aktuator-Emulators (165) enthalten,
der erste Steuerungsemulator (151) den ersten Befehlswert basierend auf dem Zustandswertes des zweiten Aktuator-Emulators (165) berechnet und die zweiten Daten mit einem aktuellen Zustandswert des ersten Aktuator-Emulators (155) bei jeder ersten Steuerungsperiode aktualisiert, und
der zweite Steuerungsemulator (161) den zweiten Befehlswert basierend auf dem Zustandswertes des ersten Aktuator-Emulators (155) berechnet und die ersten Daten mit einem aktuellen Zustandswert des zweiten Aktuator-Emulators (165) bei jeder zweiten Steuerungsperiode aktualisiert.

6. Informationsverarbeitungsprogramm, wobei das Informationsverarbeitungsprogramm von einem Computer ausgeführt wird, um die Schritte auszuführen von:
Steuern eines ersten Aktuator-Emulators (155), der ein Verhalten einer ersten Antriebsvorrichtung (600) gemäß einem eingegebenen ersten Befehlswert simuliert;
Steuern eines zweiten Aktuator-Emulators (165), der ein Verhalten einer zweiten Antriebsvorrichtung (400) simuliert, die mit der ersten Antriebsvorrichtung (600) gemäß einem eingegebenen zweiten Befehlswert zusammenarbeitet;
Steuern eines ersten Steuerungsemulators (151), der ein Verhalten einer ersten Steuerung simuliert, die die erste Antriebsvorrichtung (600) steuert, durch Ausgeben des ersten Befehlswerts an den ersten Aktuator-Emulator (155);
Steuern eines zweiten Steuerungsemulators (161), der ein Verhalten einer zweiten Steuerung simuliert, die die zweite Antriebsvorrichtung (400) steuert, durch Ausgeben des zweiten Befehlswerts an den zweiten Aktuator-Emulator (165); und
Vorbereiten von ersten und zweiten Daten, die zwischen dem ersten Steuerungsemulator und dem zweiten Steuerungsemulator gemeinsam genutzt werden,
wobei das Informationsverarbeitungsprogramm **dadurch gekennzeichnet ist, dass**
der Schritt des Steuerns des ersten Steuerungsemulators (151) Berechnen des ersten Befehlswertes unter Verwendung der ersten Daten (130A) als eine Eingabe bei jeder vorbestimmten ersten Steuerungsperiode gemäß einer Kommunikationsperiode zwischen der ersten Steuerung und der zweiten Steuerung und Aktualisieren der zweiten Daten (130B) mit Daten, die ein vorbestimmtes Sammelziel bezüglich eines Verhaltens des ersten Aktuator-Emulators (155) bei jeder ersten Steuerungsperiode sind, enthält,
der Schritt des Steuerns des zweiten Steuerungsemulators (161) Berechnen des zweiten Befehlswertes unter Verwendung der zweiten Daten (130B) als eine Eingabe und Aktualisieren der ersten Daten (130A) mit Daten, die ein vorbestimmtes Sammelziel bezüglich eines Verhaltens des zweiten Aktuator-Emulators (165) sind, bei jeder vorbestimmten zweiten Steuerungsperiode gemäß der Kommunikationsperiode enthält,
die Daten, die das Sammelziel des ersten Steuerungsemulators (151) sind, einen Zustandswert des ersten Aktuator-Emulators (155) enthalten,
die Daten, die das Sammelziel des zweiten Steuerungsemulators (161) sind, einen Zustandswert des zweiten Aktuator-Emulators (165) enthalten,
der erste Steuerungsemulator (151) den ersten Befehlswert basierend auf dem Zustandswert des zweiten Aktuator-Emulators (165) berechnet und die zweiten Daten mit einem aktuellen Zustandswert des ersten Aktuator-Emulators (155) bei jeder ersten Steuerungsperiode aktualisiert, und
der zweite Steuerungsemulator (161) den zweiten Befehlswert basierend auf dem Zustandswert des ersten Aktuator-Emulators (155) berechnet und die ersten Daten mit einem aktuellen Zustandswert des zweiten Aktuator-Emulators (165) bei jeder zweiten Steuerungsperiode aktualisiert.

## Revendications

1. Dispositif de traitement d'informations (100), comprenant :
un émulateur de premier actionneur (155), simulant un comportement d'un premier dispositif d'entraînement en fonction d'une première valeur de commande d'entrée ;
un émulateur de deuxième actionneur (165), simulant un comportement d'un deuxième dispositif d'entraînement (400) coopérant avec le premier dispositif d'entraînement (600) en fonction d'une deuxième valeur de commande d'entrée ;
un émulateur de premier dispositif de commande (151), simulant un comportement d'un premier dispositif de commande qui commande le premier dispositif d'entraînement (600) par la délivrance de la première valeur de commande à l'émulateur de premier actionneur (155) ;
un émulateur de deuxième dispositif de commande (161), simulant un comportement d'un deuxième dispositif de commande qui commande le deuxième dispositif d'entraînement (400) par la délivrance de la deuxième valeur de commande à l'émulateur de deuxième actionneur (165) ; et
un dispositif de stockage (100), stockant des premières données (130A) et des deuxièmes données (130B) partagées entre l'émulateur de premier dispositif de commande (151) et l'émulateur de deuxième dispositif de commande (161),
le dispositif de traitement d'informations (100) étant **caractérisé en ce que**
l'émulateur de premier dispositif de commande (151) calcule la première valeur de commande en utilisant les premières données (130A) en tant qu'une entrée à chaque première période de commande prédéterminée en fonction d'une période de communication entre le premier dispositif de commande et le deuxième dispositif de commande et met à jour les deuxièmes données (130B) avec des données qui sont une cible de collecte prédéterminée représentant un comportement de l'émulateur de premier actionneur (155) à chaque première période de commande,
l'émulateur de deuxième dispositif de commande (161) calcule la deuxième valeur de commande en utilisant les deuxièmes données (130B) en tant qu'une entrée et met à jour les premières données (130A) avec des données qui sont une cible de collecte prédéterminée représentant un comportement de l'émulateur de deuxième actionneur (165) à chaque deuxième période de commande prédéterminée en fonction de la période de communication,
les données qui sont la cible de collecte de l'émulateur de premier dispositif de commande (151) incluent une valeur d'état de l'émulateur de premier actionneur (155),
les données qui sont la cible de collecte de l'émulateur de deuxième dispositif de commande (161) incluent une valeur d'état de l'émulateur de deuxième actionneur (165),
l'émulateur de premier dispositif de commande (151) calcule la première valeur de commande sur la base de la valeur d'état de l'émulateur de deuxième actionneur (165) et met à jour les deuxièmes données avec une valeur d'état courante de l'émulateur de premier actionneur (155) à chaque première période de commande, et
l'émulateur de deuxième dispositif de commande (161) calcule la deuxième valeur de commande sur la base de la valeur d'état de l'émulateur de premier actionneur (155) et met à jour les premières données avec une valeur d'état courante de l'émulateur de deuxième actionneur (165) à chaque deuxième période de commande.

2. Dispositif de traitement d'informations (100) selon la revendication 1, comprenant en outre un temporisateur (140) pour générer un temps virtuel,
dans lequel la première période de commande et la deuxième période de commande sont synchronisées par le temps virtuel.

3. Dispositif de traitement d'informations (100) selon la revendication 1 ou 2,
dans lequel le dispositif de stockage (110) stocke en outre un premier programme de commande (111) pour commander l'émulateur de premier dispositif de commande (151) et un deuxième programme de commande (112) pour commander l'émulateur de deuxième dispositif de commande (161), et
un type du premier programme de commande (111) est différent d'un type du deuxième programme de commande (112) .

4. Dispositif de traitement d'informations (100) selon la revendication 3,
dans lequel le premier programme de commande (111) est un programme de type à exécution cyclique, et
le deuxième programme de commande (112) est un programme de type à exécution séquentielle.

5. Dispositif de traitement d'informations, comprenant :
la commande d'un émulateur de premier actionneur (155) qui simule un comportement d'un premier dispositif d'entraînement (600) en fonction d'une première valeur de commande d'entrée ;
la commande d'un émulateur de deuxième actionneur (165) qui simule un comportement d'un deuxième dispositif d'entraînement (400) coopérant avec le premier dispositif d'entraînement (600) en fonction d'une deuxième valeur de commande d'entrée ;
la commande d'un émulateur de premier dispositif de commande (151) qui simule un comportement d'un premier dispositif de commande qui commande le premier dispositif d'entraînement (600) par la délivrance de la première valeur de commande à l'émulateur de premier actionneur (155) ;
la commande d'un émulateur de deuxième dispositif de commande (161) qui simule un comportement d'un deuxième dispositif de commande qui commande le deuxième dispositif d'entraînement (400) par la délivrance de la deuxième valeur de commande à l'émulateur de deuxième actionneur (165) ; et
la préparation des premières données (130A) et des deuxièmes données (130B) qui sont partagées entre l'émulateur de premier dispositif de commande (151) et l'émulateur de deuxième dispositif de commande (161),
le procédé étant **caractérisé en ce que**
l'étape de commande de l'émulateur de premier dispositif de commande (151) inclut le calcul de la première valeur de commande en utilisant les premières données (130A) en tant qu'une entrée à chaque première période de commande prédéterminée en fonction d'une période de communication entre le premier dispositif de commande et le deuxième dispositif de commande et la mise à jour des deuxièmes données (130B) avec des données qui sont une cible de collecte prédéterminée en ce qui concerne un comportement de l'émulateur de premier actionneur (155) à chaque première période de commande,
l'étape de commande de l'émulateur de deuxième dispositif de commande (161) inclut le calcul de la deuxième valeur de commande en utilisant les deuxièmes données (130B) en tant qu'une entrée et la mise à jour des premières données avec des données qui sont une cible de collecte prédéterminée en ce qui concerne un comportement de l'émulateur de deuxième actionneur (165) à chaque deuxième période de commande prédéterminée en fonction de la période de communication,
les données qui sont la cible de collecte de l'émulateur de premier dispositif de commande (151) incluent une valeur d'état de l'émulateur de premier actionneur (155),
les données qui sont la cible de collecte de l'émulateur de deuxième dispositif de commande (161) incluent une valeur d'état de l'émulateur de deuxième actionneur (165),
l'émulateur de premier dispositif de commande (151) calcule la première valeur de commande sur la base de la valeur d'état de l'émulateur de deuxième actionneur (165) et met à jour les deuxièmes données avec une valeur d'état courante de l'émulateur de premier actionneur (155) à chaque première période de commande, et
l'émulateur de deuxième dispositif de commande (161) calcule la deuxième valeur de commande sur la base de la valeur d'état de l'émulateur de premier actionneur (155) et met à jour les premières données avec une valeur d'état courante de l'émulateur de deuxième actionneur (165) à chaque deuxième période de commande.

6. Programme de traitement d'informations, dans lequel le programme de traitement d'informations est exécuté par un ordinateur pour réaliser les étapes suivantes :
la commande d'un émulateur de premier actionneur (155) qui simule un comportement d'un premier dispositif d'entraînement (600) en fonction d'une première valeur de commande d'entrée ;
la commande d'un émulateur de deuxième actionneur (165) qui simule un comportement d'un deuxième dispositif d'entraînement (400) coopérant avec le premier dispositif d'entraînement (600) en fonction d'une deuxième valeur de commande d'entrée ;
la commande d'un émulateur de premier dispositif de commande (151) qui simule un comportement d'un premier dispositif de commande qui commande le premier dispositif d'entraînement (600) par la délivrance de la première valeur de commande à l'émulateur de premier actionneur (155) ;
la commande d'un émulateur de deuxième dispositif de commande (161) qui simule un comportement d'un deuxième dispositif de commande qui commande le deuxième dispositif d'entraînement (400) par la délivrance de la deuxième valeur de commande à l'émulateur de deuxième actionneur (165) ; et
la préparation de premières et deuxièmes données qui sont partagées entre l'émulateur de premier dispositif de commande et l'émulateur de deuxième dispositif de commande,
le programme de traitement d'informations étant **caractérisé en ce que**
l'étape de commande de l'émulateur de premier dispositif de commande (151) inclut le calcul de la première valeur de commande en utilisant les premières données (130A) en tant qu'une entrée à chaque première période de commande prédéterminée en fonction d'une période de communication entre le premier dispositif de commande et le deuxième dispositif de commande et la mise à jour des deuxièmes données (130B) avec des données qui sont une cible de collecte prédéterminée en ce qui concerne un comportement de l'émulateur de premier actionneur (155) à chaque première période de commande,
l'étape de commande de l'émulateur de deuxième dispositif de commande (161) inclut le calcul de la deuxième valeur de commande en utilisant les deuxièmes données (130B) en tant qu'une entrée et la mise à jour des premières données (130A) avec des données qui sont une cible de collecte prédéterminée en ce qui concerne un comportement de l'émulateur de deuxième actionneur (165) à chaque deuxième période de commande prédéterminée en fonction de la période de communication,
les données qui sont la cible de collecte de l'émulateur de premier dispositif de commande (151) incluent une valeur d'état de l'émulateur de premier actionneur (155),
les données qui sont la cible de collecte de l'émulateur de deuxième dispositif de commande (161) incluent une valeur d'état de l'émulateur de deuxième actionneur (165),
l'émulateur de premier dispositif de commande (151) calcule la première valeur de commande sur la base de la valeur d'état de l'émulateur de deuxième actionneur (165) et met à jour les deuxièmes données avec une valeur d'état courante de l'émulateur de premier actionneur (155) à chaque première période de commande, et
l'émulateur de deuxième dispositif de commande (161) calcule la deuxième valeur de commande sur la base de la valeur d'état de l'émulateur de premier actionneur (155) et met à jour les premières données avec une valeur d'état courante de l'émulateur de deuxième actionneur (165) à chaque deuxième période de commande.
